(19) Europäisches Patentamt
European Patent Office
Office européen des brevets

(11) **EP 4 508 300 B1**

(12) **FASCICULE DE BREVET EUROPEEN**

(45) Date de publication et mention
de la délivrance du brevet:
**01.04.2026 Bulletin 2026/14**

(21) Numéro de dépôt: **23717944.5**

(22) Date de dépôt: **11.04.2023**

(51) Classification Internationale des Brevets (IPC):
***E21B 17/00*** *(2006.01)*

(52) Classification Coopérative des Brevets (CPC):
**E21B 17/006**

(86) Numéro de dépôt international:
**PCT/EP2023/059440**

(87) Numéro de publication internationale:
**WO 2023/198708 (19.10.2023 Gazette 2023/42)**

(54) **PROTECTEUR POUR ELEMENTS FILETES TUBULAIRES**

SCHUTZVORRICHTUNG FÜR ROHRFÖRMIGE GEWINDEELEMENTE

PROTECTOR FOR TUBULAR THREADED ELEMENTS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **15.04.2022 FR 2203557**

(43) Date de publication de la demande:
**19.02.2025 Bulletin 2025/08**

(73) Titulaire: **Vallourec Oil and Gas France
59620 Aulnoye-Aymeries (FR)**

(72) Inventeurs:
• **BERTHET, Guillaume
92190 Meudon (FR)**
• **MAGALLANES, Gerardo
92190 Meudon (FR)**
• **VANNETZEL, Maxime
92190 Meudon (FR)**

(74) Mandataire: **Mbacke, Mactar
Vallourec Tubes
DPI
12 Rue de la Verrerie
92190 Meudon (FR)**

(56) Documents cités:
WO-A1-2019/231322    WO-A1-2021/105430
US-A1- 2005 045 240    US-A1- 2005 166 986

**Description**

**Domaine technique**

L'invention concerne des composants filetés tubulaires et plus précisément des protecteurs pour protéger l'extrémité de ces composants, tel qu'un protecteur pour un élément fileté tubulaire pour le forage, l'exploitation des puits hydrocarbures, le transport de pétrole et de gaz, le transport ou le stockage d'hydrogène, la captation carbone ou la géothermie.

**Arrière-plan technologique**

On entend ici par "composant tubulaire" tout élément ou accessoire utilisé pour forer ou exploiter un puits et comprenant au moins une extrémité filetée, encore appelée connexion ou connecteur, et destiné à être assemblé par un filetage à un autre composant tubulaire pour constituer avec cet autre composant un joint fileté tubulaire. Le composant tubulaire peut être un élément fileté tubulaire. La taille d'un élément fileté tubulaire peut être relativement de grande longueur (notamment d'environ une dizaine de mètres de longueur), par exemple un tube, ou bien un manchon tubulaire de quelques dizaines de centimètres de longueur, ou encore un accessoire de ces éléments tubulaires (dispositif de suspension ou « hanger », pièce de changement de section ou « cross-over », vanne de sécurité, connecteur pour tige de forage ou « tool joint », « sub », et analogues).

Les composants tubulaires sont généralement assemblés les uns aux autres pour être descendus dans les puits d'hydrocarbures ou des puits similaires et constituer une garniture de forage, une colonne de tubes de cuvelage (« casing ») ou de tubage (« liners ») ou encore une colonne de tubes de production (« tubing ») (colonnes d'exploitation).

La spécification API 5CT émise par l'American Petroleum Institute (API), équivalente à la norme ISO 11960 émise par l'International Standardisation Organisation (ISO), régit les tubes utilisés comme casing ou tubing, et la spécification API 5B définit des filetages standards pour ces tubes.

La spécification 7 de l'API définit des connexions filetées à épaulement pour tiges de forage rotatif.

Les éléments filetés tubulaires comprennent le plus souvent un ou plusieurs filetages dont les filets sont sensiblement trapézoïdaux et comprennent un flanc d'engagement (dit « stabbing ») du côté des filets dirigés vers l'extrémité libre de l'élément fileté considéré, un flanc porteur (dit « loading ») du côté opposé des filets d'engagement, un sommet de filet de largeur non nulle et un fond de filet de largeur également non nulle.

Les éléments filetés tubulaires précités peuvent comporter une extrémité mâle filetée qui est destinée à être vissée à une extrémité femelle filetée d'un autre composant tubulaire de forage ou d'exploitation. Il est donc indispensable que leurs extrémités mâle et femelles soient le moins possible endommagées, polluées et détériorées entre le moment où ils sortent de leur chaîne de fabrication et celui où ils sont utilisés, mais également entre deux utilisations successives. On comprendra qu'il est en effet nécessaire de protéger contre la corrosion, les poussières et les chocs (ou coups) non seulement le filetage, mais également les éventuelles portée(s) et butée(s) qui ont chacun des fonctions spécifiques et complémentaires, notamment en vue d'assurer une étanchéité en phase d'utilisation.

Les éléments filetées tubulaires dits premium ou semi-premium comportent généralement au moins une surface de butée. Une première surface de butée d'un premier élément fileté tubulaire peut être mis en contact avec une seconde surface de butée d'un second élément fileté tubulaire pour former une butée au moment du vissage. Une surface de butée peut être constituée par la surface annulaire transversale d'une partie terminale libre d'une extrémité mâle ou femelle d'un élément fileté tubulaire.

Par ailleurs, les extrémités des composants précités peuvent être enduites juste avant leur assemblage d'une graisse à propriété anti-grippante.

Cependant, il est de plus en plus courant de remplacer cette graisse par une combinaison de traitements de surface et de revêtements présentant des propriétés anti-corrosion et/ou anti-grippage apposés en fines couches sur les surfaces fonctionnelles d'un élément fileté tubulaire. Une/des surface(s) fonctionnelle(s) peut/peuvent être un ou plusieurs filetage(s), une ou plusieurs portée(s), une ou plusieurs butée(s)

Par exemple, un joint comprenant une superposition de couches dont une comprenant du Zinc-nickel anticorrosive et une couche anti-grippante de polymère lubrifiant de type polyuréthane est connu du document EP 3286288.

De plus, il est connu de l'art antérieur le document WO 2021/105430 A1 divulguant un protecteur d'extrémité de tube pour la protection des filetages de tube pour l'exploration et la production d'un puits d'hydrocarbures.

Les protecteurs sont des dispositifs dont la fonction est de protéger les surfaces fonctionnelles précédemment cités des éléments filetés tubulaires ainsi que les éventuels revêtements se trouvant sur lesdites surfaces fonctionnelles. Un protecteur est de forme générale sensiblement cylindrique et comprend généralement un corps et un moyen d'arrimage. La solution généralement adaptée pour arrimer un protecteur sur un élément fileté tubulaire est de le visser sur le filetage de la connexion. Cette solution permet un geste de montage simple associé à un positionnement précis.

Le protecteur peut comporter un filetage apte à être vissé sur le filetage d'un élément fileté tubulaire mâle ou femelle. Le filetage peut être de même type et de même pas que celui de la connexion. Un filetage de protecteur peut comprendre des filets comprenant des flancs d'engagement du côté des filets orienté vers l'extrémité libre du protecteur, lesdits flancs d'engagements étant destinés à entrer en contact avec des flancs d'engagement des filets d'un élément fileté tubulaire lors du vissage du protecteur sur la connexion. Ledit filetage de protecteur peut également comprendre des flancs porteurs, des sommets et fonds de filets et au moins une surface de butée.

Une surface de butée d'un protecteur est généralement radiale et peut être configurée pour être mis en contact avec la surface de butée d'un élément fileté tubulaire.

Un protecteur a pour but principal de protéger une surface fonctionnelle contre divers types d'agression extérieure : les endommagements mécaniques tels que des chocs mécaniques, les pollutions (chimiques ou matérielles) telles que des poussières se déposant sur les surfaces fonctionnelles ou encore la corrosion des matériaux entre le moment où le composant tubulaire sort de sa chaîne de fabrication et celui où il est utilisé (avec plusieurs actions montages-démontages possibles du dispositif de protection). Un protecteur a également pour but de protéger un revêtement pour protéger ladite surface fonctionnelle des agressions extérieures.

Les protecteurs ont été munis de moyens d'étanchéité pour renforcer l'étanchéité des espaces comprenant les surfaces fonctionnelles, avec ou sans revêtement(s), d'une connexion contre l'humidité, l'écoulement d'eau de condensation ou l'air. Ces moyens d'étanchéité sont généralement rapportés sur le protecteur, et sont réalisés dans des formes et matériaux leur conférant une souplesse accrue par rapport au corps très rigide du protecteur, afin qu'une partie de leur surface fasse contact avec une surface de la connexion en vue de réaliser un contact étanche.

Cependant, la demanderesse s'est aperçue que lors de l'arrivée sur les sites de stockage d'un élément fileté tubulaire muni d'un protecteur connu de l'état de l'art, un problème d'abrasion au niveau de la couche supérieur du revêtement a été observé sur plusieurs tubes avec une fréquence d'apparition du défaut pouvant s'élever jusqu'à 75% desdits tubes. La demanderesse a constaté ainsi une dégradation du revêtement supérieur, par exemple de la couche qui confère les propriétés anti-grippante, pouvant être composé d'une couche de polymère tel qu'une couche de polyuréthane (PU), et/ou du filetage sans revêtement malgré l'utilisation d'un protecteur selon l'état de l'art.

La demanderesse a découvert que l'origine de ce problème d'abrasion est liée à la présence de particules solides dans l'intérieur de l'élément fileté tubulaire au niveau des surfaces fonctionnelles.

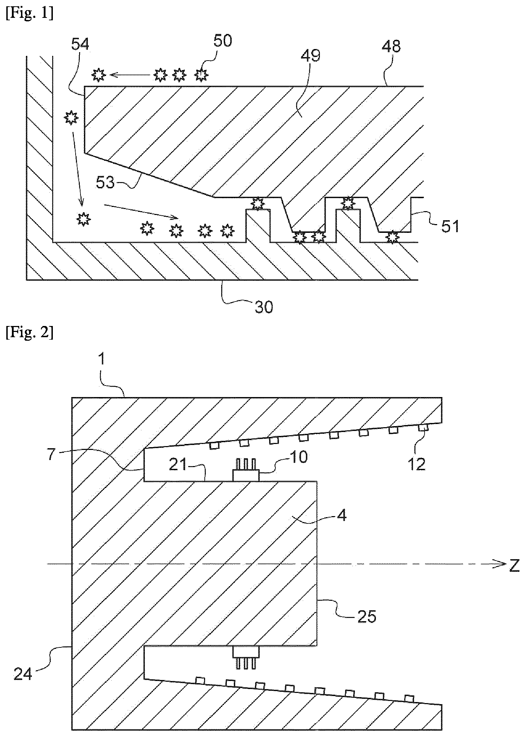

Les particules solides peuvent être d'origines diverses, il peut s'agir de la calamine formée lors du traitement thermique réalisé sur l'acier du tube, de corindon qui sont des particules d'oxyde d'alumine utilisées pour la préparation de surface lors de l'application d'un traitement tel que celui décrit dans le brevet EP 3286288 ou encore de particules de rouille se formant à l'intérieur des tubes lors des périodes de stockage extérieur. Il peut aussi s'agir de grenaille et/ou sable utilisé dans des processus de décalaminage / nettoyage de la partie interne des tubes. Plus rarement, Il peut s'agir de copeaux métalliques issus de la réalisation du filetage d'un élément fileté tubulaire. De manière générale, ces particules solides émanent donc de l'élément filetée tubulaire lui-même (Fig. 1).

On connait par exemple de l'art antérieur le document US 7,284,770 qui prévoit un protecteur comportant deux joints montés sur le corps du protecteur ; de matériau différent, par exemple en élastomères ; et réalisant une étanchéité à deux endroits distincts. Une première étanchéité avec un joint pour réaliser une étanchéité interne au niveau de l'extrémité distale du composant tubulaire, c'est-à-dire au niveau d'une surface de butée, et une deuxième étanchéité avec un joint pour réaliser l'étanchéité externe sur une paroi externe, en amont du filetage, du composant tubulaire.

D'un côté, une étanchéité avec un joint pour réaliser l'étanchéité externe se situe en amont du filetage et ne peut pas faire barrière aux particules solides tel que la calamine émanant de l'intérieur d'un élément fileté tubulaire sans que lesdites particules solides ou de calamine n'arrivent en premier sur la surface fonctionnelle et la dégrader. Ce type de joint ne peut donc pas prémunir d'une dégradation du filetage et n'est donc pas adaptée. De l'autre côté, un joint prévu pour réaliser une étanchéité au niveau de l'extrémité distale, c'est-à-dire au niveau de la surface de butée d'un élément fileté tubulaire, n'est pas satisfaisant et permet l'infiltration de particules solides tel que la calamine. En effet, la demanderesse a découvert que du fait du matériau élastomérique plus fragile du joint ainsi que des contraintes mécaniques fortes existantes au niveau des surfaces de butées, c'est-à-dire des vibrations et des chocs entre les tubes pesant plusieurs tonnes, contribuent à créer des mouvements et de petits espaces au niveau dudit joint. Lesdits espaces peuvent laisser passer les particules solides tel que la calamine et a donc pour effet une perte de fonction de protection et d'étanchéité.

Un autre problème a été identifié avec ce type de joint, à savoir qu'il a aussi tendance à rester collé sur la surface de butée de l'élément fileté tubulaire lors du retrait du protecteur, l'utilisateur final doit opérer systématiquement un contrôle visuel supplémentaire pour vérifier qu'il n'y a pas de joint resté collé et les retirer le cas échéant.

De plus, l'expérience nous a montré que lors des mouvements des tubes à l'usine ou lors du transport, il est extrêmement fréquent que les protecteurs se desserrent sans intervention extérieure. En effet comme les tubes sont ronds lors des phases de bottelage, débottelage... les protecteurs, dont le diamètre externe est plus élevé que celui des tubes ou éléments filetés tubulaires, vont venir en contact les uns avec les autres et en fonction du sens de rotation des tubes cela engendre fréquemment un desserrement du protecteur. En cas de variation de température, la dilatation thermique n'est pas égale entre l'élément fileté tubulaire en métal en comparaison avec un protecteur en plastique, qui a pour conséquence d'accentuer le desserrement du protecteur.

Par ailleurs, le joint assurant l'étanchéité externe rentre en contact avec la surface de la connexion dès le début de l'installation du protecteur et du fait de son matériau plus souple, les forces de frottement de ces joints sont très importantes. Par conséquent les opérations de vissage ainsi que le dévissage de ces protecteurs ayant recours à ce type de joint nécessitent plus de force et plus de temps.

D'autres solutions développées par la demanderesse utilisaient des protecteurs comprenant seulement un joint externe, car les infiltrations d'eau sont plus importantes par l'extérieur du tube en cas de pluie ou de passage en machine à laver sur ligne de conditionnement, en comparaison avec les infiltration internes moins importantes résultant principalement de phénomènes de condensation sur la paroi interne du tube sur les sites de stockage. Mais cette solution ne répond pas non plus au problème posé par les particules solides émanant de l'intérieur du tube tel que la calamine ou le corindon, et se concentre essentiellement sur l'étanchéité à l'eau pour améliorer les performances anticorrosion.

Il a été établi par la demanderesse qu'un joint d'un protecteur configuré pour être mis en contact soit avec une surface de butée d'un élément fileté tubulaire, soit sur la face externe d'un élément fileté tubulaire ou au niveau de l'extrémité distale, notamment en amont du filetage selon un axe longitudinal, ou encore un joint placé dans l'annulaire du protecteur ne convient pas pour bloquer des particules solides tel que la calamine à l'intérieur du tube.

L'invention permet de résoudre l'ensemble des problèmes précédemment cités. En particulier, l'invention propose une solution d'un protecteur mâle ou femelle comprenant un joint pour bloquer à l'intérieur du tube des particules solides émanant d'un élément fileté tubulaire et en particulier des particules de calamine.

Selon un mode de réalisation, l'invention fournit un protecteur pour un élément fileté tubulaire pour le forage, l'exploitation des puits hydrocarbures, le transport de pétrole et de gaz, le transport ou le stockage d'hydrogène, la captation carbone ou la géothermie, ledit protecteur comprenant un corps principal, ledit corps principal peut comprendre au moins une surface axiale extérieure s'étendant axialement et tournée vers l'extérieur de manière à pouvoir être en vis à vis d'une paroi interne d'un élément fileté tubulaire à l'état monté, caractérisé en ce que la surface axiale extérieure dudit corps principal peut être munie d'au moins un joint agencé pour bloquer des particules de calamine à l'état monté.

On entend par surface axiale extérieure une surface cylindrique ou tronconique du protecteur s'étendant selon un axe longitudinal Z et comprenant une génératrice. Cette surface axiale extérieure ne comprend pas de surface de butée ou ne fait pas partie d'une surface de butée d'un protecteur. La surface axiale extérieure peut cependant être jointive avec une surface de butée d'un protecteur.

On entend par munie d'au moins un joint, un joint qui est soit rapporté directement au-dessus de la surface axiale extérieure, soit que ladite surface admet une discontinuité locale sous forme d'une cavité ou d'un logement pour loger le joint. Un joint peut comprendre une partie basale qui vient en contact avec ladite surface axiale ou ledit logement.

Grâce à cette caractéristique, lorsque le protecteur est vissé sur l'élément fileté tubulaire la position du joint est telle qu'il repose sur la paroi interne de l'élément fileté tubulaire. Ceci permet de bloquer la circulation de toute particule solide, et en particulier de calamine, depuis l'intérieur de l'élément fileté tubulaire vers la surface fonctionnelle dudit élément fileté tubulaire, et en particulier la portée et le filetage.

Grâce à cette caractéristique, le protecteur selon l'invention permet de préserver à l'état monté avec un élément fileté tubulaire, une dégradation d'une surface fonctionnelle ou d'un revêtement de type polymère dudit élément fileté tubulaire. En particulier, le protecteur permet de préserver efficacement d'une dégradation d'un revêtement comprenant du polyuréthane (PU) et donc les propriétés anti-grippage du revêtement.

Grâce à cette caractéristique, la position du joint est telle que ledit joint s'affranchit des problèmes de desserrage des protecteurs dû aux mouvements des tubes à l'usine, lors du transport et/ou lors des variations de températures.

Grâce à cette caractéristique, le joint selon l'invention améliore fortement l'effet frein du protecteur. L'effet frein du protecteur désigne la performance d'un protecteur à ne pas se dévisser face aux contraintes extérieures, c'est-à-dire les contraintes mécaniques et/ou thermiques rencontrées sur le cycle de vie de l'élément fileté tubulaire. En effet, le protecteur va emmagasiner lors du vissage de l'énergie anti-dévissage grâce à un couple supplémentaire apporté par le joint sur l'intérieur du tube en plus de celui apporté par le protecteur fileté. En l'absence d'un joint selon l'invention, on a des effets freins plus traditionnels qui reposent uniquement sur le couple imposé par la butée du protecteur sur la partie filetée et/ou d'un couple généré dans les filets et qui ne présentent aucune efficacité dès lors que le protecteur est légèrement desserré.

Grâce à cette caractéristique, le joint selon l'invention s'affranchit également du problème d'un joint pour réaliser une surface d'étanchéité au niveau d'une surface de butée qui reste collé après retrait du protecteur. Il n'y a donc pas besoin d'opérer un contrôle visuel pour s'assurer que le joint est resté collé ou non et donc de gagner un temps précieux si on prend en considération par exemple la location journalière extrêmement couteuse d'une plateforme pétrolière.

Selon un mode de réalisation, le corps principal peut comprendre au moins une surface radiale extérieure et au moins une surface radiale intérieure, ladite surface radiale intérieure s'étendant radialement et étant à l'opposé selon un axe longitudinal Z de ladite surface radiale extérieure.

Selon un mode de réalisation, le protecteur est caractérisé en ce qu'il peut comprendre en outre un filetage ayant un pas de filetage P, et une surface de butée configurée pour être mise en contact avec une surface de butée correspondante dudit élément fileté tubulaire.

Selon un mode de réalisation, le protecteur est caractérisé en ce que la surface axiale extérieure peut comprendre un logement configuré pour loger le joint (10).

Grâce à cette caractéristique, un logement permet d'accrocher un joint et de l'ancrer dans le corps principal du protecteur. Cet accrochage peut se faire sur la totalité du joint ou en partie, notamment sur la partie basale du joint.

Selon un mode de réalisation, le protecteur est caractérisé en ce que la surface axiale extérieure comprend en outre un support de joint, ledit support de joint comprenant ledit logement.

Selon un mode de réalisation, le support de joint peut être d'un seul tenant avec le corps principal.

Selon un mode de réalisation, le support de joint peut être une pièce à part entière et liée ou rapportée au corps principal du protecteur.

Grâce à cette caractéristique, un support de joint permet une facilité d'assemblage du joint sur ledit corps principal.

Grâce à cette caractéristique, un support de joint permet une facilité d'assemblage du joint sur ledit corps principal. En effet, le support de joint confère une facilité par rapport à certains type de protecteurs qui structurellement ne permettent pas à un opérateur de glisser ses mains pour insérer le joint.

Grâce à cette caractéristique, un support de joint permet donc de retirer le joint plus facilement pour recycler le protecteur en le dotant d'un nouveau joint. En particulier lorsqu'il y a besoin de changer le joint en cas d'usure trop avancée dudit joint.

Grâce à cette caractéristique, un support de joint permet de nettoyer le protecteur des particules solides, par un retrait plus simple du support de joint. Ce retrait permet

Selon un mode de réalisation, le protecteur est caractérisé en ce que ledit logement comprenant le joint peut comprendre au moins une section profilée configurée pour retenir ledit joint dans le logement.

Une section profilée peut comprendre différentes formes et peut être par exemple un segment ou une protubérance qui s'étend axialement depuis la surface axiale extérieure ou par extension de celle-ci. Une section profilée peut également être une protubérance qui s'étend axialement depuis un support de logement comprenant un logement.

Grâce à cette caractéristique, la section profilée permettra un meilleur maintien dudit joint dans ledit logement et donc d'empêcher un éventuel échappement ou glissement du joint.

Selon un mode de réalisation, le protecteur est caractérisé en ce que ledit joint peut être de type élastomère, brosse à poils souple, mousse ou lèvre plastique.

Grâce à cette caractéristique, chacun de ces types de joints joue son rôle de barrière lorsqu'il est en interférence avec la paroi interne du tube pour bloquer les particules solides et en particulier la calamine. En outre, un joint de type élastomère du fait du matériau plus souple présente des capacités d'adaptation et de déformation élastique améliorées dans le logement d'un support de joint. Un joint de type brosse à poils souple ou mousse présente un faible coût de fabrication et présente une grande facilité d'installation. Un joint de type lèvre plastique présente l'avantage d'un faible nombre d'étape de fabrication.

Selon un mode de réalisation, le protecteur est caractérisé en ce que le support de joint peut être lié à la surface axiale extérieure au moyen d'un système de pas de vis inversés, optionnellement renforcé par de la colle, un système de rivetage, de soudure par friction ou de soudure par apport de matière.

Grâce à cette caractéristique, le support de joint présente une meilleure résistance et évite les risques de décrochages face aux conditions de stockage, transport et les chocs provoqués par les lignes de production et phase de chargement ou déchargement. La colle permet un renforcement additionnel de la résistance de l'assemblage.

Selon un mode de réalisation, le protecteur est caractérisé en ce que la position minimale du joint par rapport à l'axe Z peut être déterminé selon l'équation suivante :

$$Zp2 \geq P/2$$

Avec :

P : Valeur en mm correspondant au pas de filetage du protecteur.
Zp2 : Valeur en mm de la distance, selon l'axe Z, entre la surface de butée du protecteur et le joint.

Grâce à cette caractéristique, on établit une position minimale afin que l'étanchéité aux particules solides reste conservée lorsque le protecteur est légèrement desserré et que le protecteur n'a pas reculé selon l'axe Z d'une distance supérieur à Zp2 avec P/2 étant une distance minimale de sécurité et correspondant à la moitié de la valeur en mm du pas de filetage du protecteur.

De la même manière, la position minimale permet également de conserver l'effet frein lorsque le protecteur est légèrement desserré et que le protecteur n'a pas reculé selon l'axe Z d'une distance supérieur à Zp2. Ceci apporte une sécurité supplémentaire que le protecteur restera bien en place sur la partie filetée de l'élément fileté tubulaire.

Grâce à cette caractéristique, la position minimale du joint permet de s'assurer que ledit joint soit suffisamment éloigné de toute surface de butée c'est-à-dire de la surface de butée du protecteur, ou encore de la surface de butée de l'élément fileté tubulaire, à l'état monté. Cette distance minimale permet de préserver le joint du point de jonction des surfaces de butées de l'élément fileté tubulaire et du protecteur où les chocs peuvent être violent.

Dans le cas où les pas de filetages du protecteur ne sont pas constants par exemple P1 suivi de P2 avec P1 différent de P2, alors P correspond toujours à la plus petite valeur.

Zp2 implique nécessairement une distance non-nulle du joint par rapport à la butée, c'est-à-dire supérieure à 0.

Selon un mode de réalisation, le protecteur est caractérisé en ce que la position maximale du joint par rapport à l'axe Z peut être déterminé selon l'équation suivante :

$$Zp2 + Zp1 \leq Zf$$

Avec :

Zf : Valeur de la distance entre la surface de butée et la fin du filetage mâle ou femelle du protecteur selon l'axe Z.
Zp1 : Valeur de la longueur axiale de contact du joint au niveau de la surface axiale extérieure selon l'axe Z.
Zp2 : Valeur en mm de la distance, selon l'axe Z, entre la surface de butée du protecteur et le joint

Grâce à cette caractéristique, on s'assure que l'effet frein conféré par le joint ne démarre pas trop tôt, c'est-à-dire avant l'engagement des filets du protecteurs avec ceux de l'élément filetée tubulaire. En effet, dans ce cas de figure il faudra plus de force et plus de temps pour l'installer. Additionnellement, un effet frein trop important peut aussi conduire à rendre difficile voire impossible le dévissage manuel obligeant un opérateur à utiliser des outils dédiés pour desserrer le protecteur, engendrant donc des coûts opérationnels supplémentaires ainsi qu'une perte de temps considérable.

Selon un mode de réalisation, le protecteur est caractérisé en ce que la position maximale du joint par rapport à l'axe Z peut être comprise entre :

$$0{,}05 \text{ x } (Zf) \leq Zp2 + Zp1 \leq 0{,}3 \text{ x } (Zf)$$

Avec :

Zf : Valeur de la distance entre la surface de butée et la fin du filetage mâle ou femelle du protecteur selon l'axe Z.
Zp1 : Valeur de la longueur axiale de contact du joint au niveau de la surface axiale extérieure selon l'axe Z.
Zp2 : Valeur en mm de la distance, selon l'axe Z, entre la surface de butée du protecteur et le joint

Grâce à cette caractéristique, on s'assure d'une position optimale du joint avec le meilleur ratio entre niveau de conservation de l'étanchéité en cas de desserrement du protecteur et du niveau de l'effet frein.

Enfin il est également un objet de la présente demande d'un élément fileté tubulaire comprenant un protecteur selon l'invention et selon l'ensemble des modes de réalisation précédemment décrits.

## Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

[Fig.1] La [Fig.1] décrit de façon schématique, selon une vue de coupe longitudinale, un protecteur selon l'état de l'art en contact avec un élément fileté tubulaire.

[Fig.2] La [Fig.2] décrit de façon schématique, selon une vue de coupe longitudinale, un protecteur mâle selon un premier mode de réalisation de l'invention muni d'un joint.

[Fig.3] La [Fig.3] décrit de façon schématique, selon une vue de coupe longitudinale, un protecteur mâle selon un deuxième mode de réalisation de l'invention muni d'un joint.

[Fig.4] La [Fig.4] décrit de façon schématique, selon une vue en coupe longitudinale, une portion d'un protecteur femelle selon un troisième mode de réalisation de l'invention muni d'un support de joint d'un seul tenant avec le corps principal comprenant un joint.

[Fig.5] La [Fig.5] décrit de façon schématique, selon une vue en coupe longitudinale, un protecteur mâle selon un quatrième mode de réalisation de l'invention à l'état monté avec un élément filetée tubulaire.

[Fig.6] La [Fig.6] décrit de façon schématique, selon une vue en coupe longitudinale, un protecteur mâle comprenant un joint selon un cinquième mode de réalisation de l'invention.

[Fig.7] La [Fig.7] décrit de façon schématique, selon une vue en coupe longitudinale une portion d'un protecteur mâle selon un sixième mode de réalisation de l'invention comprenant un support de joint avec au moins une section profilée.

[Fig.8] La [Fig.8] décrit de façon schématique, selon une vue en coupe longitudinale une portion d'un protecteur selon un septième mode de réalisation de l'invention comprenant une surface axiale extérieure avec au moins une section profilée.

## Description détaillée des figures

Dans la suite de la description et les revendications, les termes « extérieur » ou « intérieur » et les orientations « axial » et « radial » seront utilisés pour désigner, selon les définitions données dans la description, des éléments d'un protecteur ou d'un élément fileté tubulaire. L'axe longitudinal Z détermine l'orientation "axiale". L'orientation "radiale" est dirigée orthogonalement à l'axe longitudinal Z.

La [Fig.1] décrit un protecteur mâle 30 selon l'état de l'art, à l'état monté avec un élément fileté tubulaire 49 mâle comprenant une paroi interne 48, un filetage 51, une portée 53 ainsi qu'une surface de butée 54.

Plus spécifiquement, la [Fig.1] montre le cheminement des particules solides telles que la calamine ou le corindon provenant de l'intérieur de l'élément fileté tubulaire 49 par exemple depuis la paroi interne 48 et s'infiltrant au niveau du filetage 51 en passant par la surface de butée 54 et du protecteur 30. La présence desdites particules solides peut endommager le filetage 51, ou alors par exemple une couche supérieure anti-grippage d'un revêtement appliqué sur ledit filetage 51 pouvant conduire à d'éventuels rejets de l'élément fileté tubulaire 49 à son arrivé sur le site de production et de forage. Une absence de joint ou un mauvais positionnement du joint, tel qu'un joint sur la surface de butée 54 ou en amont du filetage 51 pour réaliser une étanchéité externe, conduit au même résultat insatisfaisant.

La [Fig.2] décrit un protecteur 1 mâle selon un mode de réalisation de l'invention comprenant un filetage mâle 12 et une surface de butée 7. Ledit filetage mâle 12 est configuré pour être vissé au filetage mâle opposé d'un élément fileté tubulaire mâle 49. Ladite surface de butée 7 est configurée pour être mis en contact avec la surface de butée d'une extrémité d'un élément fileté tubulaire 49 mâle. Le protecteur 1 comprend également un corps principal 4 comprenant au moins une surface radiale extérieure 24 et au moins une surface radiale intérieure 25. Chacune des surfaces radiales s'étendant radialement et étant à l'opposé l'une de l'autre selon un axe longitudinal Z. Ledit corps principal 4 comprend une surface axiale extérieure 21 qui n'admet pas de discontinuité dans ce mode de réalisation. Une surface axiale extérieure 21 débute depuis la surface de butée 7 et se termine au niveau de la surface radiale intérieure 25. Ladite surface axiale extérieure ne comprend pas le filetage du protecteur.

On entend par surface axiale extérieure une surface cylindrique ou tronconique du protecteur s'étendant selon un axe longitudinal Z et comprenant une génératrice. La surface axiale extérieure 21 est tournée vers l'extérieure de manière à se retrouver à l'intérieur d'un élément fileté tubulaire et en vis-à-vis d'une paroi interne dudit élément fileté tubulaire à l'état monté du protecteur mâle ou femelle sur ledit élément fileté tubulaire mâle ou femelle.

Ladite surface axiale extérieure 21 comprend un joint 10 agencé pour bloquer des particules solides 50 tel que de la calamine à l'état monté. Le joint 10 est rapporté sur la surface axiale et ne fait pas partie du corps principal 4, c'est-à-dire qu'il n'est pas d'un seul tenant avec le corps principal 4.

Le joint 10 peut être de type élastomère, brosse à poils souple, mousse ou lèvre plastique. Ces types de joints peuvent présenter des avantages supplémentaires et différents mais sont tous au moins capable de bloquer des particules solides tel que de la calamine ou du corindon.

Un joint de type élastomère du fait du matériau plus souple présente des capacités d'adaptation et de déformation élastique améliorées dans le logement d'un support de joint. Un joint de type brosse à poils souple ou mousse présente un faible coût de fabrication et présente une grande facilité d'installation. Un joint de type lèvre plastique présente l'avantage d'un faible nombre d'étape de fabrication.

Le joint 10 étant rapporté sur la surface axiale extérieure 21, celui-ci est configuré pour être mis en contact contre la paroi interne d'un élément fileté tubulaire lors du vissage du protecteur avec ledit élément fileté tubulaire.

La position du joint 10 permet que ledit joint s'affranchit des problèmes de desserrage des protecteurs dû aux mouvements des tubes à l'usine, lors du transport et/ou lors des variations de températures. Cette position permet notamment à ce que ledit joint reste suffisamment éloigné des zones de contraintes fortes tel que la surface de butée. Ceci permet, à l'état monté, une étanchéité complète sans création d'espaces et de mouvements responsables de potentielles infiltrations des particules solides dans la zone des surfaces fonctionnelles d'un élément fileté tubulaire. Un autre avantage de la position du joint 10 est qu'elle permet améliorer l'effet frein du protecteur.

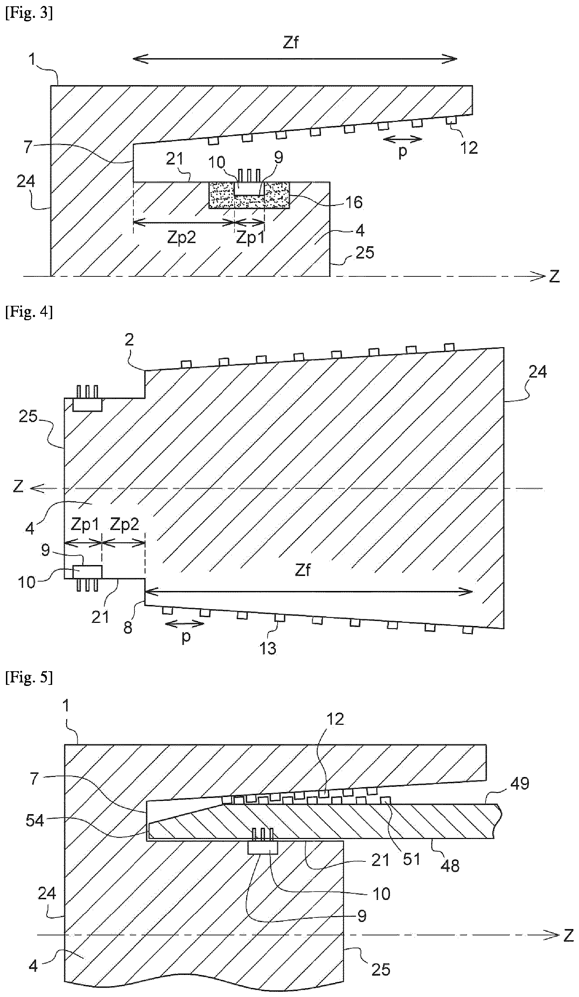

La [Fig.3] décrit une portion d'un protecteur mâle 1 selon l'invention. Ce deuxième mode de réalisation diffère de celui de la [Fig.2] en ce que, ledit corps principal 4 comprend une surface axiale extérieure 21 comprenant une discontinuité sous forme d'un logement 9. Le corps principal 4 comprend un support de joint 16. Le support de joint peut ne pas être du même matériau que le corps principal 4 et être rapportée d'un seul tenant avec ledit corps principal 4. Cependant l'invention n'est pas restreinte à ce mode de réalisation et peut comprendre d'autres variantes selon lesquelles le support de joint est d'un seul tenant avec ledit corps principal 4.

Dans la [Fig.3], le pas de filetage P correspond à la valeur en mm correspondant au pas de filetage du protecteur 1. La notion de pas de filetage doit être comprise à la lumière de l'ISO 5408:2009 qui porte sur la définition des filetages. Cependant, on notera que la notion de filetage mâle ou femelle diffère pour les protecteurs en comparaison aux éléments filetés tubulaires. En effet, on qualifie un protecteur de mâle ou de femelle non pas par rapport à l'orientation du filetage mais plutôt à leur correspondance de l'élément fileté tubulaire mâle ou femelle. Par exemple un protecteur sera mâle s'il est destiné à être vissé et protéger un élément fileté tubulaire mâle. Le protecteur sera dit femelle s'il doit correspondre à un élément fileté tubulaire femelle.

Zf correspond à la valeur de la distance entre la surface de butée 7 et la fin du filetage mâle 12 du protecteur 1 selon l'axe Z. Ensuite, Zp1 correspond à la valeur de la longueur axiale de contact du joint 10 au niveau de la surface axiale extérieure 21 selon l'axe Z. Enfin, Zp2 correspond à la valeur en mm de la distance, selon l'axe Z, entre la surface de butée 7 du protecteur 1 et le joint 10.

D'un côté, la position minimale du joint 10 par rapport à l'axe Z est déterminé selon l'équation suivante :

$$Zp2 \geq P/2$$

Avec :

P : Valeur en mm correspondant au pas de filetage du protecteur.
Zp2 : Valeur en mm de la distance, selon l'axe Z, entre la surface de butée du protecteur et le joint

Cette position minimale permet de conserver le bénéfice apporté par l'effet frein même lorsque le protecteur est légèrement desserré et que le protecteur n'a pas reculé selon l'axe Z d'une distance supérieur à Zp2 avec P/2 étant une distance minimale de sécurité et correspondant à la moitié de la valeur en mm du pas de filetage P du protecteur. Ceci apporte une sécurité que le protecteur restera bien en place sur la partie filetée du tube

De l'autre côté, la position maximale du joint (10) par rapport à l'axe Z est comprise entre :

$$Zp2 + Zp1 \leq Zf$$

Avec :

Zf : Valeur de la distance entre la surface de butée et la fin du filetage mâle du protecteur selon l'axe Z.
Zp1 : Valeur de la longueur axiale de contact du joint au niveau de la surface axiale extérieure selon l'axe Z.
Zp2 : Valeur en mm de la distance, selon l'axe Z, entre la surface de butée du protecteur et le joint

Grâce à cette caractéristique, on s'assure que l'effet frein conféré par le joint 10 ne soit trop important. L'objectif étant de faciliter le dévissage manuel d'un opérateur en s'affranchissant d'utilisation d'outil de dévissage pour un gain de temps et une meilleure facilité d'utilisation de l'invention.

Selon un mode de réalisation, la position maximale du joint (10) par rapport à l'axe Z est comprise entre :

$$0{,}05 \text{ x } (Zf) \leq Zp2 + Zp1 \leq 0{,}3 \text{ x } (Zf)$$

Avec :

Zf : Valeur de la distance entre la surface de butée et la fin du filetage mâle du protecteur selon l'axe Z.
Zp1 : Valeur de la longueur axiale de contact du joint au niveau de la surface axiale extérieure selon l'axe Z.
Zp2 : Valeur en mm de la distance, selon l'axe Z, entre la surface de butée du protecteur et le joint

Ceci permet d'assurer une position optimale du joint pour obtenir le meilleur ratio entre un niveau suffisant de l'effet frein / et entre un niveau suffisant de préservation du joint en cours d'utilisation.

L'ensemble des équations reste valable avec ou sans support de joint et ce pour un protecteur mâle 1 ou un protecteur femelle 2.

Pour simplifier l'approche, des exemples de valeurs empiriques des paramètres des équations ont été déterminées et validées pour l'ensemble des équations précédemment décrites. Ces valeurs sont données dans le tableau 1 suivant pour des protecteurs mâles selon le diamètre externe nominal du protecteur (OD) :

[Tableau 1]

| OD (mm) | 208,275 | 154,3 | 284,475 |
|---------|---------|-------|---------|
| Zp2 (mm) | 6 | 6 | 8 |
| Zp1 (mm) | 6 | 6 | 6 |
| P (mm) | 8.5 | 5.1 | 5.1 |
| Zf (mm) | 140 | 125 | 145 |

L'ensemble des développements décrits pour un protecteur mâle sont applicables à un protecteur femelle.

La [Fig.4] décrit un protecteur femelle 2 selon un mode de réalisation de l'invention. Le protecteur femelle 2 comprend un filetage femelle 13, configuré pour être vissé au filetage femelle opposé d'un élément fileté tubulaire femelle (non représenté sur la [Fig.4]), ainsi que d'une surface de butée 8 configurée pour être mis en contact avec une surface de butée d'un élément fileté tubulaire femelle. Le protecteur 2 comprend également un corps principal 4 comprenant au moins une surface radiale extérieure 24 et au moins une surface radiale intérieure 25 s'étendant radialement et étant à l'opposé selon un axe longitudinal Z de ladite surface radiale extérieure.

Ledit corps principal 4 comprend une surface axiale extérieure 21 qui, dans ce mode de réalisation, admet une discontinuité sous forme d'un logement 9 faisant partie de la surface axiale extérieure 21. Il n'y a pas de support de joint dans cette figure mais le protecteur femelle peut tout aussi bien comprendre un support de joint 16 comprenant ledit logement 9.

Dans la [Fig.4], le pas de filetage P correspond à la valeur en mm correspondant au pas de filetage du protecteur. Zf correspond à la valeur de la distance entre la surface de butée 8 et la fin du filetage femelle 13 du protecteur 2 selon l'axe Z. Ensuite, Zp1 correspond à la valeur de la longueur axiale de contact du joint 10 au niveau de la surface axiale extérieure 21 selon l'axe Z. Enfin, Zp2 correspond à la valeur en mm de la distance, selon l'axe Z, entre la surface de butée 8 du protecteur 2 et le joint 10.

Pour simplifier l'approche, des exemples de valeurs empiriques des paramètres des équations ont été déterminées et validées pour l'ensemble des équations précédemment décrites. Ces valeurs sont données dans le tableau 2 suivant pour des protecteurs femelles selon le diamètre externe nominal du protecteur (OD) :

[Tableau 2]

| OD (mm) | 208,275 | 154,3 | 284,475 |
|---------|---------|-------|---------|
| Zp2 (mm) | 4 | 3 | 3 |
| Zp1 (mm) | 6 | 6 | 6 |
| P (mm) | 8.5 | 5.1 | 5.1 |
| Zf (mm) | 99 | 91 | 136 |

Les équations développées à la [Fig.3] pour un protecteur mâle sont applicables à un protecteur femelle.

De manière générale, par analogie, l'ensemble des développements établis pour un protecteur femelle selon l'invention sont applicables à un protecteur mâle et inversement.

La [Fig.5] décrit un protecteur mâle 1 selon un mode de réalisation de l'invention à l'état monté avec un élément fileté tubulaire 49. Dans cette configuration, la surface de butée du protecteur 7 et la surface de butée 54 de l'élément fileté tubulaire sont en contact. Les filetages 12 du protecteur 1 et de l'élément fileté tubulaires 51 sont engagés. La surface axiale extérieure 21 fait face à la paroi interne 48 de l'élément fileté tubulaire 49.

Dans ce mode de réalisation ladite surface axiale extérieure 21 présente une discontinuité sous forme de logement 9 comprenant un joint 10, mais il est tout aussi admis que l'invention puisse aussi comprendre une surface axiale extérieure 21 sans logement 9 et muni du joint 10.

A l'état monté, le joint 10 est en contact avec la paroi interne 48 pour bloquer les particules solides et en particulier de calamine. Ledit joint 10 peut être de type élastomère, brosse à poils souple, mousse ou lèvre plastique.

Dans cette configuration, on comprend la position du joint 10 et son aptitude à bloquer les particules solides émanant de la paroi 48 afin qu'elles n'endommagent pas les surfaces fonctionnelles que sont par exemple la portée 53 et le filetage 51.

La surface radiale intérieur 25 à l'état monté se trouve à l'intérieur de l'élément fileté tubulaire. La surface radiale extérieure 24 est à l'opposé de ladite surface intérieure 25 et peut ne pas se retrouver à l'intérieur de l'élément fileté tubulaire.

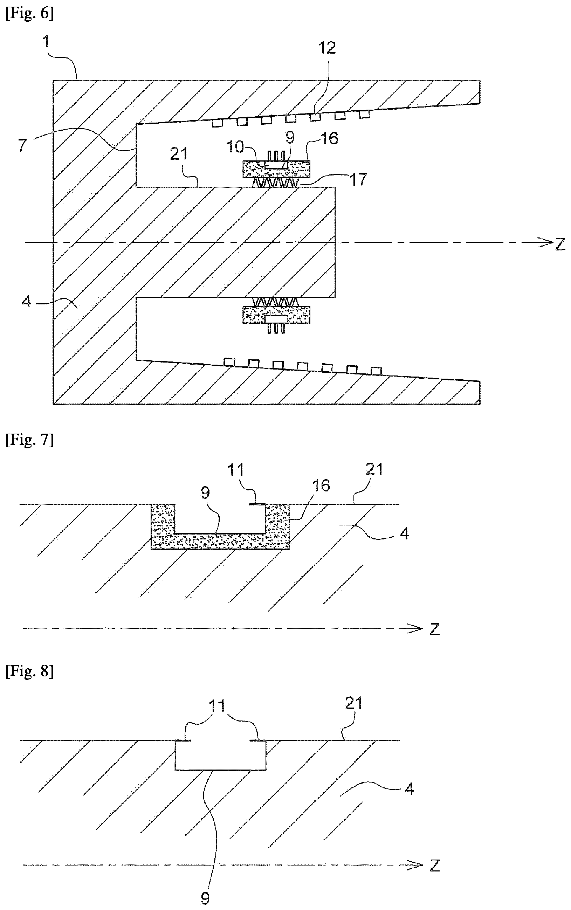

La [Fig.6] décrit un protecteur mâle 1 comprenant une surface de butée 7, un filetage 12, un corps principal 4 et une surface axiale extérieure 21. Ladite surface axiale extérieure 21 comprend un support de joint 16 qui n'est pas d'un seul tenant avec le corps principal 4, ledit support de joint comprend un logement 9.

Le support de joint 16 comprenant le logement 9 est lié à la surface axiale extérieure 21 au moyen d'un système de pas de vis inversé 17 ou encore au moyen d'un système de rivetage, d'un moyen par soudure par friction ou de soudure par apport de matière. Chacun de ces moyens de liaison peut être optionnellement renforcé par de la colle.

Ceci permet que le support de joint présente une meilleure résistance et évite les risques de décrochages du support de joint 16 face aux conditions de stockage, transport et les chocs provoqués par les lignes de production et phase de chargement ou déchargement. La colle, lorsque présente, permet un renforcement additionnel de la résistance de l'assemblage du support de joint 16, du logement 9 et du joint 10.

Le logement 9 peut comprendre éventuellement une section profilée 11 au niveau du logement 9 tel que représenté dans la [Fig.7].

La surface axiale extérieure 21 de la [Fig.6] est continue dans ce mode de réalisation, mais l'invention admet le cas où la surface axiale extérieure 21 peut être discontinue également.

La [Fig.7] décrit un mode de réalisation de l'invention selon lequel la surface axiale extérieure 21 d'un protecteur mâle ou femelle comprend une discontinuité locale dans laquelle un support de joint 16 comprenant un logement 9 a été rapporté.

Dans ce mode de réalisation le matériau du support de joint est différent de celui du corps principal 4 et comprend un logement 9 pour loger un joint 10. Ledit logement 9 admet une section profilée 11 qui s'étend selon un axe Z et qui est configuré pour recouvrir partiellement un joint 10 afin de maintenir ledit joint 10 dans le logement 9.

Une section profilée peut comprendre différentes formes et peut être par exemple un segment ou une protubérance qui s'étend axialement depuis la surface axiale extérieure ou par extension de celle-ci. Une section profilée peut également être une protubérance qui s'étend axialement depuis un support de logement comprenant un logement.

La [Fig.8] décrit une variante de l'invention selon laquelle la surface axiale extérieure 21 d'un protecteur mâle ou femelle comprenant un logement 9 comprend au moins une section profilé 11.

L'une ou l'autre des sections profilées 11 s'étend selon un axe Z et fait saillie axialement depuis la surface axiale extérieure 21. Le segment protubérant est configurée pour recouvrir partiellement un joint 10 ou au moins la partie basale d'un joint 10 afin de maintenir ledit j oint 10 dans le logement 9.

## Revendications

1. Protecteur (1, 2) pour un élément fileté tubulaire (49) pour le forage, l'exploitation des puits hydrocarbures, le transport de pétrole et de gaz, le transport ou le stockage d'hydrogène, la captation carbone ou la géothermie, ledit protecteur (1, 2) comprenant un corps principal (4), ledit corps principal (4) comprenant au moins une surface axiale extérieure (21) s'étendant axialement et tournée vers l'extérieur de manière à pouvoir être en vis à vis d'une paroi interne (48) d'un élément fileté tubulaire (49) à l'état monté, **caractérisé en ce que** la surface axiale extérieure (21) dudit corps principal (4) est munie d'au moins un joint (10) agencé pour bloquer des particules de calamine (50) à l'état monté.

2. Protecteur (1, 2) selon la revendication 1 **caractérisé en ce qu'**il comprend en outre un filetage (12, 13) ayant un pas de filetage P, et une surface de butée (7, 8) configurée pour être mise en contact avec une surface de butée correspondante dudit élément fileté tubulaire (49).

3. Protecteur (1, 2) selon l'une quelconque des revendications précédentes **caractérisé en ce que** la surface axiale extérieure (21) comprend un logement (9) configuré pour loger le joint (10).

4. Protecteur (1, 2) selon la revendication 3 **caractérisé en ce que** la surface axiale extérieure (21) comprend en outre un support de joint (16), ledit support de joint (16) comprenant ledit logement (9).

5. Protecteur (1, 2) selon l'une quelconque des revendications 3 ou 4 **caractérisé en ce que** ledit logement (9) comprenant le joint (10) comprends au moins une section profilée (11) configurée pour retenir ledit joint (10) dans le logement (9).

**6.** Protecteur (1, 2) selon l'une quelconque des revendications précédentes **caractérisé en ce que** ledit joint (10) est soit de type élastomère, brosse à poils souple, mousse ou lèvre plastique.

**7.** Protecteur (1, 2) selon l'une quelconque des revendications 3 à 6, **caractérisé en ce que** le support de joint (16) est lié à la surface axiale extérieure (21) au moyen d'un système de pas de vis inversé (17) optionnellement renforcé par de la colle, un système de rivetage, de soudure par friction ou de soudure par apport de matière.

**8.** Protecteur (1, 2) selon l'une quelconque des revendications 2 à 7 **caractérisé en ce que** la position minimale du joint (10) par rapport à l'axe Z est déterminé selon l'équation suivante :

$$Zp2 \geq P/2$$

Avec :

P : Valeur en mm correspondant au pas de filetage du protecteur.
Zp2 : Valeur en mm de la distance, selon l'axe Z, entre la surface de butée du protecteur et le joint.

**9.** Protecteur (1, 2) selon l'une quelconque des revendications 2 à 8 **caractérisé en ce que** la position maximale du joint (10) par rapport à l'axe Z est déterminé selon l'équation suivante :

$$Zp2 + Zp1 \leq Zf$$

Avec :

Zf : Valeur de la distance entre la surface de butée et la fin du filetage mâle ou femelle du protecteur selon l'axe Z.
Zp1 : Valeur de la longueur axiale de contact du joint au niveau de la surface axiale extérieure selon l'axe Z.
Zp2 : Valeur en mm de la distance, selon l'axe Z, entre la surface de butée du protecteur et le joint.

**10.** Protecteur (1, 2) selon la revendication 9 **caractérisé en ce que** la position maximale du joint (10) par rapport à l'axe Z est comprise entre :

$$0,05 \text{ x } (Zf) \leq Zp2 + Zp1 \leq 0,3 \text{ x } (Zf)$$

Avec :

Zf : Valeur de la distance entre la surface de butée et la fin du filetage mâle ou femelle du protecteur selon l'axe Z.
Zp1 : Valeur de la longueur axiale de contact du joint au niveau de la surface axiale extérieure selon l'axe Z.
Zp2 : Valeur en mm de la distance, selon l'axe Z, entre la surface de butée du protecteur et le joint.

**11.** Elément fileté tubulaire (49) comprenant un protecteur (1, 2) selon l'une quelconque des revendications 1 à 10.

**Patentansprüche**

**1.** Schutzvorrichtung (1, 2) für ein rohrförmiges Gewindeelement (49) für das Bohren, die Ausbeutung der Kohlenwasserstoffbohrungen, den Transport oder die Speicherung von Wasserstoff, die Kohlenstoffabscheidung oder die Geothermie, wobei die Schutzvorrichtung (1, 2) einen Hauptkörper (4) umfasst, wobei der Hauptkörper (4) mindestens eine äußere axiale Fläche (21) umfasst, die sich axial erstreckt und nach außen gewandt ist, so dass sie sich gegenüber einer Innenwand (48) eines rohrförmigen Gewindeelements (49) im montierten Zustand befinden kann, **dadurch gekennzeichnet, dass** die äußere axiale Fläche (21) des Hauptkörpers (4) mit mindestens einer Dichtung (10) ausgestattet ist, die dazu eingerichtet ist, im montierten Zustand Zunderpartikel (50) zu blockieren.

**2.** Schutzvorrichtung (1, 2) nach Anspruch 1, **dadurch gekennzeichnet, dass** sie außerdem ein Gewinde (12, 13) mit einer Gewindesteigung P umfasst, und eine Anschlagfläche (7, 8), die dafür ausgelegt ist, mit einer entsprechenden Anschlagfläche des rohrförmigen Gewindeelements (49) in Kontakt gebracht zu werden.

3. Schutzvorrichtung (1, 2) nach einem der vorhergehenden Ansprüche, **dadurch gekennzeichnet, dass** die äußere axiale Fläche (21) eine Aufnahme (9) umfasst, die dafür ausgelegt ist, die Dichtung (10) aufzunehmen.

4. Schutzvorrichtung (1, 2) nach Anspruch 3, **dadurch gekennzeichnet, dass** die äußere axiale Fläche (21) außerdem einen Dichtungsträger (16) umfasst, wobei der Dichtungsträger (16) die Aufnahme (9) umfasst.

5. Schutzvorrichtung (1, 2) nach einem der Ansprüche 3 oder 4, **dadurch gekennzeichnet, dass** die Aufnahme (9), welche die Dichtung (10) umfasst, mindestens einen Profilabschnitt (11) umfasst, der dafür ausgelegt ist, die Dichtung (10) in der Aufnahme (9) zu halten.

6. Schutzvorrichtung (1, 2) nach einem der vorhergehenden Ansprüche, **dadurch gekennzeichnet, dass** die Dichtung (10) vom Typ Elastomerdichtung, Bürste mit flexiblen Borsten, Schaumstoff oder Kunststofflippe ist.

7. Schutzvorrichtung (1, 2) nach einem der Ansprüche 3 bis 6, **dadurch gekennzeichnet, dass** der Dichtungsträger (16)
mit der äußeren axialen Fläche (21) mittels eines Systems mit umgekehrter Schraubensteigung (17), das optional durch Klebstoff verstärkt ist, eines Nietsystems, einer Reibschweißung oder einer Materialauftragsschweißung verbunden ist.

8. Schutzvorrichtung (1, 2) nach einem der Ansprüche 2 bis 7, **dadurch gekennzeichnet, dass** die minimale Position der Dichtung (10) bezüglich der Achse Z durch die folgende Gleichung bestimmt ist:

$$Zp2 \geq P/2,$$

wobei:

P: Wert in mm, welcher der Gewindesteigung der Schutzvorrichtung entspricht.
Zp2: Wert in mm des Abstands, entlang der Achse Z, zwischen der Anschlagfläche der Schutzvorrichtung und der Dichtung.

9. Schutzvorrichtung (1, 2) nach einem der Ansprüche 2 bis 8, **dadurch gekennzeichnet, dass** die maximale Position der Dichtung (10) bezüglich der Achse Z durch die folgende Gleichung bestimmt ist:

$$Zp2 + Zp1 \leq Zf,$$

wobei:

Zf: Wert des Abstands zwischen der Anschlagfläche und dem Ende des Außen- oder Innengewindes der Schutzvorrichtung entlang der Achse Z.
Zp1: Wert der axialen Kontaktlänge der Dichtung an der äußeren axialen Fläche entlang der Achse Z.
Zp2: Wert in mm des Abstands, entlang der Achse Z, zwischen der Anschlagfläche der Schutzvorrichtung und der Dichtung.

10. Schutzvorrichtung (1, 2) nach Anspruch 9, **dadurch gekennzeichnet, dass** für die maximale Position der Dichtung (10) bezüglich der Achse Z gilt:

$$0,05 \text{ x } (Zf) \leq Zp2 + Zp1 \leq 0,3 \text{ x } (Zf),$$

wobei:

Zf: Wert des Abstands zwischen der Anschlagfläche und dem Ende des Außen- oder Innengewindes der Schutzvorrichtung entlang der Achse Z.
Zp1: Wert der axialen Kontaktlänge der Dichtung an der äußeren axialen Fläche entlang der Achse Z.
Zp2: Wert in mm des Abstands, entlang der Achse Z, zwischen der Anschlagfläche der Schutzvorrichtung und der Dichtung.

**11.** Rohrförmiges Gewindeelement (49), welches eine Schutzvorrichtung (1, 2) nach einem der Ansprüche 1 bis 10 umfasst.

**Claims**

**1.** Protector (1, 2) for a tubular threaded element (49) for drilling, exploitation of hydrocarbon wells, transport of oil and gas, transport or storage of hydrogen, carbon capture or geothermy, said protector (1, 2) including a main body (4), said main body (4) including at least one exterior axial surface (21) extending axially and facing outward in such a manner as to be able in the assembled state to face an internal wall (48) of a tubular threaded element (49), **characterized in that** the exterior axial surface (21) of said main body (4) is fitted with at least one seal (10) adapted in the assembled state to block particles of scale (50).

**2.** Protector (1, 2) according to Claim 1, **characterized in that** it further includes a thread (12, 13) having a thread pitch P and an abutment surface (7, 8) configured to be brought into contact with a corresponding abutment surface of said tubular threaded element (49).

**3.** Protector (1, 2) according to either one of the preceding claims, **characterized in that** the exterior axial surface (21) includes a housing (9) configured to accommodate the seal (10).

**4.** Protector (1, 2) according to Claim 3, **characterized in that** the exterior axial surface (21) further includes a seal support (16), said seal support (16) including said housing (9).

**5.** Protector (1, 2) according to either one of Claims 3 or 4, **characterized in that** said housing (9) containing the seal (10) includes at least one profiled section (11) configured to retain said seal (10) in the housing (9).

**6.** Protector (1, 2) according to any one of the preceding claims,
**characterized in that** said seal (10) is of elastomer, flexible bristle brush, foam or plastic lip type.

**7.** Protector (1, 2) according to any one of Claims 3 to 6, **characterized in that** the support (16) is connected to the exterior axial surface (21) by means of a reverse screw pitch system (17) optionally reinforced with glue, a riveting system, a friction welding system or a welding system that adds material.

**8.** Protector (1, 2) according to any one of Claims 2 to 7, **characterized in that** the minimum position of the seal (10) relative to the axis Z is determined by the following equation:

$$Zp2 \geq P/2$$

with:

P: value in mm of the thread pitch of the protector.
Zp2: value in mm of the distance along the axis Z between the abutment surface of the protector and the seal.

**9.** Protector (1, 2) according to any one of Claims 2 to 8, **characterized in that** the maximum position of the seal (10) relative to the axis Z is determined by the following equation:

$$Zp2 + Zp1 \leq Zf$$

with:

Zf: value of the distance between the abutment surface and the end of the male or female thread of the protector along the axis Z.
Zp1 : value of the axial contact length of the seal at the level of the exterior axial surface along the axis Z.
Zp2: value in mm of the distance along the axis Z between the abutment surface of the protector and the seal.

**10.** Protector (1, 2) according to Claim 9, **characterized in that** the maximum position of the seal (10) relative to the axis Z is between, inclusive:

$$0.05 \text{ x (Zf)} \leq \text{Zp2} + \text{Zp1} \leq 0.3 \text{ x (Zf)}$$

with:

Zf: value of the distance between the abutment surface and the end of the male or female thread of the protector along the axis Z.
Zp1 : value of the axial contact length of the seal at the level of the exterior axial surface along the axis Z.
Zp2: value in mm of the distance along the axis Z between the abutment surface of the protector and the seal.

11. Tubular threaded element (49) including a protector (1, 2) according to any one of Claims 1 to 10.

[Fig. 1]

[Fig. 2]

[Fig. 3]

[Fig. 4]

[Fig. 5]

[Fig. 6]

[Fig. 7]

[Fig. 8]

**EP 4 508 300 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3286288 A
- WO 2021105430 A1

- US 7284770 B